# EUROPEAN PATENT SPECIFICATION

(11) **EP 2 773 063 B1**
(45) Date of publication and mention of the grant of the patent: **09.12.2015**
(21) Application number: 11877428.0
(22) Date of filing: 15.12.2011
(51) Int. Cl.: H04L 12/10, H04L 12/40

(54) **POWER SUPPLY METHOD, CURRENT SHARING MODULE AND POWER SUPPLY SYSTEM**
STROMVERSORGUNGSVERFAHREN, STROMTEILUNGSMODUL UND STROMVERSORGUNGSSYSTEM
PROCÉDÉ D'ALIMENTATION ÉLECTRIQUE, MODULE DE PARTAGE DE COURANT ET SYSTÈME D'ALIMENTATION ÉLECTRIQUE

(43) Date of publication of application: 03.09.2014
(73) Proprietor: Huawei Technologies Co., Ltd., Longgang District Shenzhen, Guangdong 518129 (CN)
(72) Inventor: YANG, Tiandong, Shenzhen Guangdong 518129 (CN); CHEN, Mingsong, Shenzhen Guangdong 518129 (CN)
(74) Representative: Haley, Stephen
(86) International application number: PCT/CN2011/084062
(87) International publication number: WO 2013/086720

(56) References cited:
- CN-A- 101 112 043
- CN-A- 101 594 236
- CN-A- 102 215 113
- US-A1- 2005 122 140
- US-A1- 2007 263 675
- US-A1- 2011 241 425

## Description

### FIELD OF THE INVENTION

Embodiments of the present invention relate to the field of communications technologies, and in particular, to a power supply method, a current equalization module, and a power supply system.

### BACKGROUND OF THE INVENTION

Along with the technological advancement, power over Ethernet (Power Over Ethernet, PoE for short) has been employed to supply power to more devices such as VoIP terminals, surveillance cameras, and point of sale terminals. In a PoE network, electric energy is supplied by a power sourcing equipment (Power Sourcing Equipment, PSE for short), and the electric energy generated by the PSE is transmitted over an Ethernet cable, and consumed by a powered device (Powered Device, PD for short). Considering the reliability of electric energy transmission over the Ethernet, a maximum of 25 W electric energy can be transmitted from a PSE to a PD according to a prior standard.

However, a power input of 25 W is insufficient to maintain normal running of many devices. To enable the Ethernet to supply larger power, the prior art provides a method of supplying electric energy with large power, in which two or more PSEs are used for power supply. Electric energy generated by these PSEs is transmitted to a PD across the Ethernet, separately passes through a direct current/direct current (Direct Current/Direct Current, DC/DC for short) voltage converter, and is then output to the load after being combined by using a current equalization module. In this way, the power available for a load is twice of that when only a PSE and a PD are deployed. When a load needs larger power, more PSEs, PDs, and DC/DCs need to be connected in parallel before the currents are equalized. In the prior art, however, currents are equalized after being converted by DC/DC, that is, one DC/DC module must be added for one more PoE line. A DC/DC module is bulky and expensive. If larger power is required, more DC/DC modules must be used, which increases the costs.

US2005/122140 and US2001/241425 both disclose power supply methods with current equalization.

The present invention provides a power supply method, a current equalization module, and a power supply system, which helps reduce the number of required voltage converters (that is, DC/DC modules) and thereby reduces the implementation costs. In one aspect, the present invention provides a power supply method, comprising: detecting, by a current equalization module, currents of at least two power supply lines to which the current equalization module is connected; equalizing, by the current equalization module, the currents of the at least two power supply lines based on the intensity of the currents that have been detected in order to enable the currents of at least two power supply lines to have the same intensity; and sending, by the current equalization module, the equalized currents to a voltage converter, so that the voltage converter supplies power to a terminal device after converting voltage corresponding to the equalized currents, characterised in that the step of detecting, by a current equalization module, currents of at least two power supply lines to which the current equalization module is connected comprises: detecting, by the current equalization module after the current equalization module has detected that powered devices connected to each of the at least two power supply lines has been powered on, the currents of the at least two power supply lines connected to the current equalization module.

In another aspect, the present invention provides a current equalization module, comprising a current detection unit, a central control unit, and a current control unit, wherein: the current detection unit is configured to detect currents of at least two power supply lines to which the current equalization module is connected; the central control unit is configured to send a current equalization signal to the current control unit based on the intensity of the currents that have been detected by the current detection unit; and the current control unit is configured to equalize the currents of the at least two power supply lines based on the current equalization signal sent by the central control unit to enable the currents of at least two power supply lines to have the same intensity, and then send the equalized currents to a voltage converter, characterised by further comprising: a power-on control unit, configured to instruct, after the current equalization module has detected that powered devices connected to each of the at least two power supply lines has been powered on, the current detection unit to detect the currents of the at least two power supply lines to which the current equalization module is connected.

In still another aspect, the present invention provides a power supply system, comprising at least two pieces of power sourcing equipment, at least two powered device, a current equalization module, and a voltage converter, wherein: the at least two pieces of power sourcing equipment are configured to output currents; the at least two powered devices are configured to receive currents from the at least two power sourcing equipments connected to the at least two powered devices, separately, and send the currents to the current equalization module, wherein the at least two powered devices are connected to the current equalizer module by using at least two power supply lines; the current equalization module is configured to detect currents of at least two power supply lines to which the current equalization module is connected, equalize the currents of the at least two power supply lines based on the intensity of the currents that have been detected to enable the currents of at least two power supply lines to have the same intensity, and send the equalized currents to the voltage converter; and the voltage converter is configured to convert voltage corresponding to the equalized currents and supply power to a terminal device, and characterised in that the current equalization module is specifically configured to detect, after the current equalization module has detected that powered devices connected to each of the at least two power supply lines has been powered on, the currents of the at least two power supply lines to which the current equalization module is connected.

According to the solution provided by the present invention, a current equalization module equalizes the currents of at least two power supply lines to which the current equalization module is connected, and a voltage converter converts the voltage of the currents before supplying power to terminal devices. In this way, currents have been equalized before arriving at a voltage converter (that is, a DC/DC module), so that only one voltage converter (that is, one DC/DC module) is used even in the case of large power output, which reduces the number of required voltage converters (that is, DC/DC modules) and thereby reduces the costs.

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flow chart of a power supply method according to an embodiment of the present invention;
FIG. 2 is a schematic structural diagram of a current equalization module according to an embodiment of the present invention;
FIG. 3 is a schematic structural diagram of a current equalization module according to another embodiment of the present invention;
FIG. 4 is a schematic structural diagram of a power supply system according to an embodiment of the present invention;
FIG. 5 is a schematic structural diagram of another power supply system according to an embodiment of the present invention.

### DETAILED DESCRIPTION OF THE EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

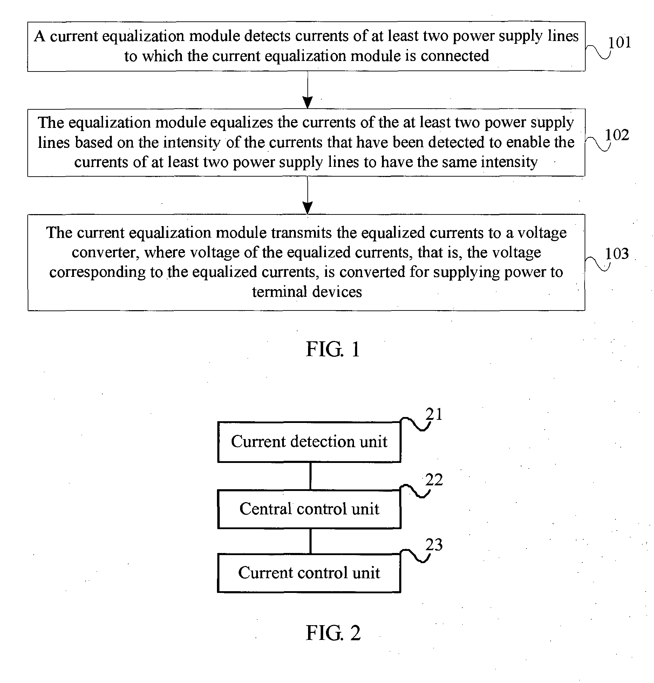

FIG. 1 is a flow chart of a power supply method according to an embodiment of the present invention. As shown in FIG. 1, the power supply method includes the following steps:
Step 101: A current equalization module detects currents in at least two power supply lines to which the current equalization module is connected.

Specifically, after detecting that powered devices connected to each of the at least two power supply lines has been powered on, the current equalization module detects the currents of the at least two power supply lines to which the current equalization module is connected.
Step 102: The current equalization module equalizes the currents of the at least two power supply lines based on the intensity of the currents that have been detected in order to enable the currents of at least two power supply lines to have the same intensity.
Step 103: The current equalization module transmits the equalized currents to a voltage converter, where voltage of the equalized currents, that is, the voltage corresponding to the equalized currents, is converted for supplying power to terminal devices.

In the embodiment of the present invention, a current equalization module equalizes the currents of at least two power supply lines to which the current equalization module is connected, and a voltage converter converts the voltage of the currents, and then the voltage converter supplies power to terminal devices. In this way, currents have been equalized before arriving at a voltage converter (that is, a DC/DC module), so that only one voltage converter (that is, one DC/DC module) is used even in the case of large power output, which reduces the number of required voltage converters (that is, DC/DC modules) and thereby reduces the costs.

Persons of ordinary skill in the art may understand that all or part of the steps of the methods in the embodiments may be implemented by a program instructing relevant hardware. The program may be stored in a computer readable storage medium. When the program is run, the foregoing steps of the methods in the embodiments are performed. The storage medium may be any medium capable of storing program codes, such as ROM, RAM, magnetic disk, or optical disk.

FIG. 2 is a schematic structural diagram of a current equalization module according to an embodiment of the present invention. The current equalization module in this embodiment helps realize the power supply method according to the embodiment shown in FIG. 1. As shown in FIG. 2, the current equalization module may include a current detection unit 21, a central control unit 22, and a current control unit 23.

The current detection unit 21 is configured to detect currents in at least two power supply lines to which the current equalization module is connected.

The central control unit 22 is configured to send a current equalization signal to the current control unit 23 based on the intensity of the currents that have been detected by the current detection unit 21.

The current control unit 23 is configured to equalize the currents of the at least two power supply lines based on the current equalization signal sent by the central control unit 22 to enable the currents of at least two power supply lines to have the same intensity, and then send the equalized currents to a voltage converter.

The current equalization module equalizes the currents of at least two power supply lines to which the current equalization module is connected, and a voltage converter converts the voltage of the currents before supplying power to terminal devices. In this way, currents have been equalized before arriving at a voltage converter (that is, a DC/DC module), so that only one voltage converter (that is, one DC/DC module) is used even in the case of large power output, which reduces the number of required voltage converters (that is, DC/DC modules) and thereby reduces the costs.

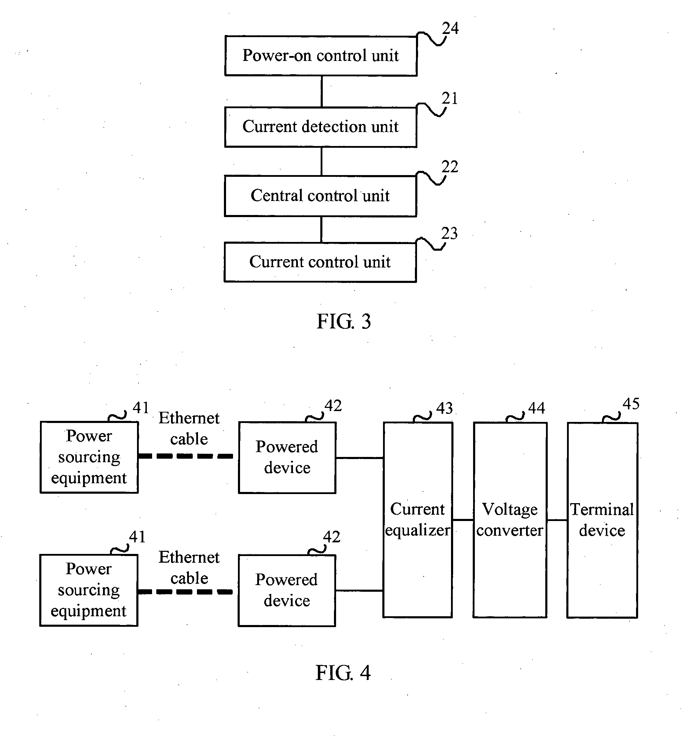

FIG. 3 is a schematic structural diagram of a current equalization module according to another embodiment of the present invention. Compared with the current equalization module shown in FIG. 2, the current equalization module shown in FIG. 3 further includes:
a power-on control unit 24, configured to instruct, after the current equalization module has detected that powered devices connected to each of the at least two power supply lines has been powered on, the current detection unit 21 to detect currents in at least two power supply lines to which the current equalization module is connected.

The current equalization module equalizes the currents of at least two power supply lines to which the current equalization module is connected, and a voltage converter converts the voltage of the currents before supplying power to terminal devices. In this way, currents have been equalized before arriving at a voltage converter (that is, a DC/DC module), so that only one voltage converter (that is, one DC/DC module) is used even in the case of large power output, which reduces the number of required voltage converters (that is, DC/DC modules) and thereby reduces the costs.

FIG. 4 is a schematic structural diagram of a power supply system according to an embodiment of the present invention. As shown in FIG. 4, the power supply system may include at least two power sourcing equipments 41, at least two powered devices 42, a current equalization module 43, and a voltage converter 44.

The at least two power sourcing equipments 41 are configured to output currents.

The at least two powered devices 42 are configured to receive currents of the at least two power sourcing equipments 41 to which they are connected, separately, and send the currents to the current equalization module 43. There should be at least two power supply lines between the at least two powered devices 42 and the current equalization module 43.

The current equalization module 43 is configured to detect currents of at least two power supply lines connected to itself, equalize the currents of the at least two power supply lines based on the intensity of the currents that have been detected in order to enable the currents of at least two power supply lines to have the same intensity, and send the equalized currents to a voltage converter 44. Specifically, the current equalization module 43 can detect currents of the at least two power supply lines after detecting that the powered devices 42 connected to the at least two power supply lines have been powered on. That is, according to this embodiment, power is supplied to terminal devices only after the powered devices 42 connected to the at least two power supply lines are powered on. In this way, the damage to terminal devices and other safety incidents are prevented, which are caused by an excessively large current flowing through one power supply line due to different time when the at least two power supply lines transmit electricity.

Specifically, the current equalization module 43 can be designed according to the embodiment illustrated in FIG. 2 or FIG. 3.

The voltage converter 44 is configured to convert the voltage of the equalized currents and supply power to a terminal device 45.

In this embodiment, the at least two power sourcing equipments 41 may be integrated on the same device or arranged on multiple devices in a distributed manner, and the at least two powered devices 42 may be arranged likewise.

In the power system, after the current equalization module 43 equalizes the currents of at least two power supply lines to which the current equalization module is connected, and the voltage converter 44 converts the voltage of the currents, and then voltage converter supplies power to the terminal device 45. In this way, currents have been equalized before arriving at the voltage converter 44 (that is, the DC/DC module), so that only one voltage converter (that is, one DC/DC module) is used even in the case of large power output, which reduces the number of required voltage converters 44 (that is, DC/DC modules) and thereby reduces the costs.

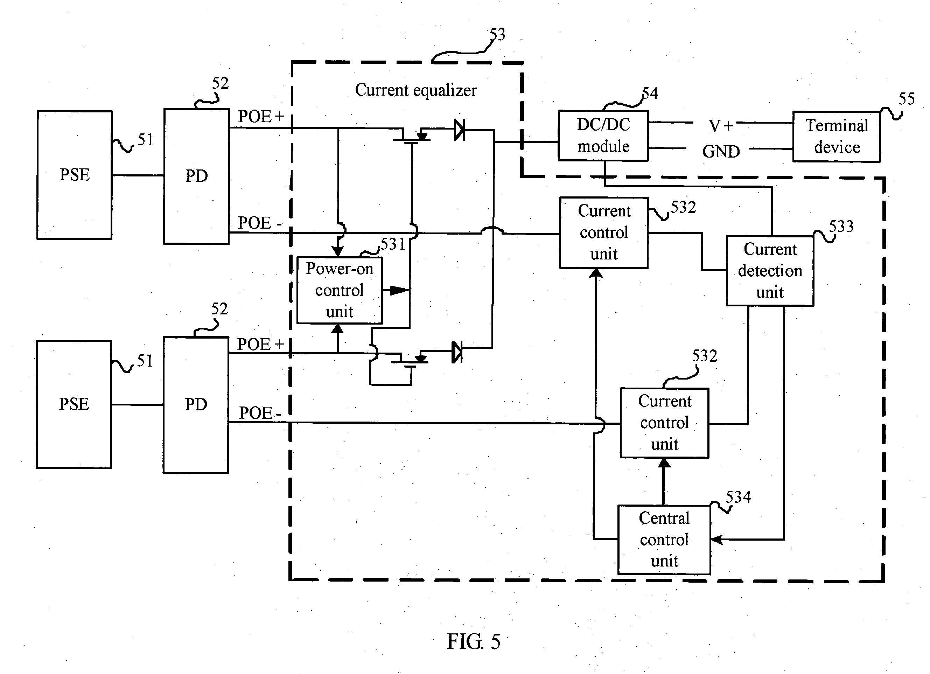

FIG. 5 is a schematic structural diagram of a power supply system according to another embodiment of the present invention, in which a DC/DC module which is used as the voltage converter is used as an example for description. As shown in FIG. 5, the power supply system may include a PSE 51, a PD 52, a DC/DC module 54, a terminal device 55, and a current equalization module 53.

This embodiment assumes that the power supply system includes two PSEs 51, two PDs 52, one current equalization module 53, one DC/DC module 54, and one terminal device 55. That is, the embodiment takes the power supply system with two PDs as an example and is not limited hereto. The implementation scheme of the power supply system including at least three PDs is similar to that of a power supply system with two PDs, which is not further described herein. In this embodiment, the two PSEs 51 may be integrated on the same device or arranged on multiple devices in a distributed manner; likewise, the two PDs 52 may be integrated on the same device or arranged on multiple devices in a distributed manner.

In this embodiment, the current equalization module 53 includes a power-on control unit 531, a current control unit 532, a current detection unit 533, and a central control unit 534.

Specifically, a PSE 51 outputs a current, and a PD 52 receives the current output by the PSE 51 to which the PD 52 is connected.

The power-on control unit 531 of the current equalization module is configured to instruct, after the current equalization module has detected that two PDs 52 have been powered on, the current detection unit 533 to detect a current of the power supply line that connects to the current equalization module 53. That is, the power-on control unit 531 implements a process in which a circuit is on and succeeding circuits and terminal devices are supplied with power only after all PDs 52 of the power supply system have been powered on. In this way, the damage to terminal devices or other safety incidents are prevented, which are caused by an excessively large current flowing through one power supply line due to different time when the at least two power supply lines transmit electricity.

The current detection unit 533 is configured to detect the current of the power supply line that connects to the current equalization module 53. As shown in FIG. 5, the current detection unit 533 detects the current of the 48 V-power supply line that connects to the current equalization module 53 and then sends a current signal that has been detected or a voltage signal converted from the current signal that has been detected to the central control unit 534. Alternatively, the current detection unit 533 may send the intensity of the currents that have been detected to the central control unit 534 in other ways, which is not limited in this embodiment.

Next, the central control unit 534 sends a current equalization signal to the current control unit 532 based on the intensity of the currents that have been detected, instructing the current control unit 532 to equalize the currents of two PoE-lines to which the current equalization module is connected, so that the currents of the two PoE-lines can be equal in intensity. That is, after receiving the current equalization signal from the central control unit 534, the current control unit 532 equalizes the currents of the two PoE-lines to which the current equalization module 53 is connected in order to enable the currents of two PoE-lines to have the same intensity.

After the currents are equalized by the current equalization module 53, the DC/DC module 54 supplies power to the terminal device 55 after converting voltage corresponding to the equalized currents.

In the power supply system, after the current equalization module 53 equalizes currents of power supply lines to which the current equalization module is connected, the DC/DC module 54 converts the voltage of the equalized currents and then supplies power to the terminal device 55. In this way, currents have been equalized before arriving at the DC/DC module 54, so that only one DC/DC module 54 is used even in the case of large power output, which reduces the number of required DC/DC modules 54 and thereby reduces the costs.

The power supply method, current equalization module, and power supply system provided by embodiments of the present invention can be applied to not only PoE but also such related scenarios as where strict control is exerted on a current of a single power cable.

Persons skilled in the art should understand that the figures attached below are merely schematic diagrams of a preferred embodiment, and modules or processes in these figures may not be mandatory for the present invention.

Persons skilled in the art should understand that the modules in the apparatuses provided in the embodiments may be arranged in the apparatuses in a distributed manner according to the description of the embodiments, or may be arranged in one or multiple apparatuses which are different from those described in the embodiments. The modules in the foregoing embodiments may be combined into one module, or split into a plurality of sub-modules.

Finally, it should be noted that, the foregoing embodiments are merely intended for describing the technical solutions of the present invention other than limiting the present invention. Although the present invention is described in detail with reference to the foregoing embodiments, persons of ordinary skill in the art should understood that they may still make modifications to the technical solutions described in the foregoing embodiments, or make equivalent replacements to part of the technical features thereof, without departing from the scope of the technical solutions of the embodiments of the present invention.

## Claims

1. A power supply method, comprising:
detecting, by a current equalization module, currents of at least two power supply lines to which the current equalization module is connected;
equalizing, by the current equalization module, the currents of the at least two power supply lines based on the intensity of the currents that have been detected in order to enable the currents of at least two power supply lines to have the same intensity; and
sending, by the current equalization module, the equalized currents to a voltage converter, so that the voltage converter supplies power to a terminal device after converting voltage corresponding to the equalized currents, **characterised in that**
the step of detecting, by a current equalization module, currents of at least two power supply lines to which the current equalization module is connected comprises:
detecting, by the current equalization module after the current equalization module has detected that powered devices connected to each of the at least two power supply lines has been powered on, the currents of the at least two power supply lines connected to the current equalization module.

2. A current equalization module, comprising a current detection unit (21), a central control unit (22), and a current control unit (23), wherein:
the current detection unit is configured to detect currents of at least two power supply lines to which the current equalization module is connected;
the central control unit is configured to send a current equalization signal to the current control unit based on the intensity of the currents that have been detected by the current detection unit; and
the current control unit is configured to equalize the currents of the at least two power supply lines based on the current equalization signal sent by the central control unit to enable the currents of at least two power supply lines to have the same intensity, and then send the equalized currents to a voltage converter, **characterised by** further comprising:
a power-on control unit (24), configured to instruct, after the current equalization module has detected that powered devices connected to each of the at least two power supply lines has been powered on, the current detection unit to detect the currents of the at least two power supply lines to which the current equalization module is connected.

3. A power supply system, comprising at least two pieces of power sourcing equipment (41), at least two powered device (42), a current equalization module (43), and a voltage converter (44), wherein:
the at least two pieces of power sourcing equipment are configured to output currents;
the at least two powered devices are configured to receive currents from the at least two power sourcing equipments connected to the at least two powered devices, separately, and send the currents to the current equalization module, wherein the at least two powered devices are connected to the current equalizer module by using at least two power supply lines;
the current equalization module is configured to detect currents of at least two power supply lines to which the current equalization module is connected, equalize the currents of the at least two power supply lines based on the intensity of the currents that have been detected to enable the currents of at least two power supply lines to have the same intensity, and send the equalized currents to the voltage converter; and
the voltage converter is configured to convert voltage corresponding to the equalized currents and supply power to a terminal device, and **characterised in that**
the current equalization module is specifically configured to detect, after the current equalization module has detected that powered devices connected to each of the at least two power supply lines has been powered on, the currents of the at least two power supply lines to which the current equalization module is connected.

## Patentansprüche

1. Stromversorgungsverfahren mit den folgenden Schritten:
ein Stromentzerrungsmodul detektiert Ströme von mindestens zwei Stromversorgungsleitungen, mit denen das Stromentzerrungsmodul verbunden ist;
das Stromentzerrungsmodul entzerrt die Ströme der mindestens zwei Stromversorgungsleitungen auf der Basis der Intensität der Ströme, die detektiert wurden, um zu ermöglichen, dass die Ströme von mindestens zwei Stromversorgungsleitungen dieselbe Intensität aufweisen; und
das Stromentzerrungsmodul sendet die entzerrten Ströme zu einem Spannungsumsetzer, so dass der Spannungsumsetzer nach dem Umsetzen von den entzerrten Strömen entsprechender Spannung eine Endgerätevorrichtung mit Strom versorgt,
**dadurch gekennzeichnet, dass**
der Schritt des Detektierens von Strömen von mindestens zwei Stromversorgungsleitungen, mit denen das Stromentzerrungsmodul verbunden ist, durch ein Stromentzerrungsmodul, Folgendes umfasst:
das Stromentzerrungsmodul detektiert die Ströme der mindestens zwei Stromversorgungsleitungen, die mit dem Stromentzerrungsmodul verbunden sind, nachdem das Stromentzerrungsmodul detektiert hat, dass mit jeder der mindestens zwei Stromversorgungsleitungen verbundene mit Strom versorgte Vorrichtungen eingeschaltet wurden.

2. Stromentzerrungsmodul, das eine Stromdetektionseinheit (21), eine zentrale Steuereinheit (22) und eine Stromsteuereinheit (23) umfasst, wobei
die Stromdetektionseinheit ausgelegt ist zum Detektieren von Strömen von mindestens zwei Stromversorgungsleitungen, mit denen das Stromentzerrungsmodul verbunden ist;
die zentrale Steuereinheit ausgelegt ist zum Senden eines Stromentzerrungssignals zu der Stromsteuereinheit auf der Basis der Intensität der Ströme, die durch die Stromdetektionseinheit detektiert wurden; und
die Stromsteuereinheit ausgelegt ist zum Entzerren der Ströme der mindestens zwei Stromversorgungsleitungen auf der Basis des durch die zentrale Steuereinheit gesendeten Stromentzerrungssignals, um zu ermöglichen, dass die Ströme von mindestens zwei Stromversorgungsleitungen dieselbe Intensität aufweisen, und dann Senden der entzerrten Ströme zu einem Spannungsumsetzer, **dadurch gekennzeichnet, dass** es ferner Folgendes umfasst:
eine Einschalt-Steuereinheit (24), die dafür ausgelegt ist, die Stromdetektionseinheit anzuweisen, die Ströme der mindestens zwei Stromversorgungsleitungen, mit denen das Stromentzerrungsmodul verbunden ist, zu detektieren, nachdem das Stromentzerrungsmodul detektiert hat, dass mit Strom versorgte Vorrichtungen, die mit jeder der mindestens zwei Stromversorgungsleitungen verbunden sind, eingeschaltet wurden.

3. Stromversorgungssystem, das mindestens zwei Elemente von Stromquellengeräten (41), mindestens zwei mit Strom versorgte Vorrichtungen (42), ein Stromentzerrungsmodul (43) und einen Spannungsumsetzer (44) umfasst, wobei
die mindestens zwei Elemente von Stromquellengeräten dafür ausgelegt sind, Ströme auszugeben;
die mindestens zwei mit Strom versorgten Vorrichtungen ausgelegt sind zum separaten Empfangen von Strömen von den mindestens zwei Stromquellengeräten, die mit den mindestens zwei mit Strom versorgten Vorrichtungen verbunden sind, und Senden der Ströme zu dem Stromentzerrungsmodul, wobei die mindestens zwei mit Strom versorgten Vorrichtungen durch Verwendung von mindestens zwei Stromversorgungsleitungen mit dem Stromentzerrungsmodul verbunden sind;
das Stromentzerrungsmodul ausgelegt ist zum Detektieren von Strömen von mindestens zwei Stromversorgungsleitungen, mit denen das Stromentzerrungsmodul verbunden ist, Entzerren der Ströme der mindestens zwei Stromversorgungsleitungen auf der Basis der Intensität der Ströme, die detektiert wurden, um zu ermöglichen, dass die Ströme von mindestens zwei Stromversorgungsleitungen dieselbe Intensität aufweisen, und Senden der entzerrten Ströme zu dem Spannungsumsetzer; und
der Spannungsumsetzer ausgelegt ist zum Umsetzen von den entzerrten Strömen entsprechender Spannung und Versorgen einer Endgerätevorrichtung mit Strom und **dadurch gekennzeichnet, dass**
das Stromentzerrungsmodul spezifisch ausgelegt ist zum Detektieren der Ströme der mindestens zwei Stromversorgungsleitungen, mit denen das Stromentzerrungsmodul verbunden ist, nachdem das Stromentzerrungsmodul detektiert hat, dass mit jeder der mindestens zwei Stromversorgungsleitungen verbundene mit Strom versorgte Vorrichtungen eingeschaltet wurden.

## Revendications

1. Procédé d'alimentation électrique comprenant :
la détection, grâce à un module d'égalisation de courants, de courants d'au moins deux lignes d'alimentation auxquelles est relié le module d'égalisation de courants, l'égalisation, grâce au module d'égalisation de courants, des courants des deux lignes d'alimentation ou plus sur la base de l'intensité des courants qui ont été détectés afin de permettre l'obtention d'une même intensité pour les courants des deux lignes d'alimentation ou plus, et
l'envoi, grâce au module d'égalisation de courants, des courants égalisés vers un convertisseur de tension de telle sorte que le convertisseur de tension fournisse de l'énergie à un terminal après avoir converti la tension correspondant aux courants égalisés, **caractérisé en ce que**
l'étape de détection, grâce à un module d'égalisation de courants, de courants d'au moins deux lignes d'alimentation auxquelles est relié le module d'égalisation de courants comprend :
la détection des courants des deux lignes d'alimentation ou plus reliées au module d'égalisation de courants, grâce au module d'égalisation de courants après que le module d'égalisation de courants a détecté que des dispositifs alimentés, reliés à chacune des deux lignes d'alimentation ou plus, ont été mis sous tension.

2. Module d'égalisation de courants, comprenant une unité de détection de courant (21) une unité de contrôle centrale (22) et une unité de régulation de courant (23), dans lequel :
l'unité de détection de courant est configurée pour détecter des courants d'au moins deux lignes d'alimentation auxquelles est relié le module d'égalisation de courants,
l'unité de contrôle centrale est configurée pour envoyer un signal d'égalisation de courants à l'unité de régulation de courant sur la base de l'intensité des courants qui ont été détectés par l'unité de détection de courant, et
l'unité de régulation de courant est configurée pour égaliser les courants des deux lignes d'alimentation ou plus sur la base du signal d'égalisation de courants envoyé par l'unité de contrôle centrale afin de permettre l'obtention d'une même intensité pour les courants des deux lignes d'alimentation ou plus, et ensuite pour envoyer les courants égalisés vers un convertisseur de tension, **caractérisé en ce qu'**il comprend en outre :
une unité de contrôle de mise sous tension (24) configurée pour ordonner à l'unité de détection de courant de détecter les courants des deux lignes d'alimentation ou plus auxquelles est relié le module d'égalisation de courants, après que le module d'égalisation de courants a détecté que des dispositifs alimentés reliés à chacune des deux lignes d'alimentation ou plus ont été mis sous tension.

3. Système d'alimentation, comprenant au moins deux équipements formant source de puissance (41), au moins deux dispositifs alimentés (42), un module d'égalisation de courants (43) et un convertisseur de tension (44), dans lequel :
les deux équipements formant source de puissance ou plus sont configurés pour fournir des courants en sortie,
les deux dispositifs alimentés ou plus sont configurés pour recevoir des courants provenant des deux équipements formant source de puissance ou plus reliés séparément aux deux dispositifs alimentés ou plus, et pour envoyer les courants vers le module d'égalisation de courants, dans lequel les deux dispositifs alimentés ou plus sont reliés au module d'égalisation de courants en utilisant au moins deux lignes d'alimentation,
le module d'égalisation de courants est configuré pour détecter des courants d'au moins deux lignes d'alimentation auxquelles est relié le module d'égalisation de courants, pour égaliser les courants des deux lignes d'alimentation ou plus sur la base de l'intensité des courants qui ont été détectés afin de permettre aux courants d'au moins deux lignes d'alimentation de présenter la même intensité, et pour envoyer les courants égalisés vers le convertisseur de tension, et
le convertisseur de tension est configuré pour convertir une tension correspondant aux courants égalisés et fournir une alimentation à un terminal, et **caractérisé en ce que**
le module d'égalisation de courants est en particulier configuré pour détecter les courants des deux lignes d'alimentation ou plus auxquelles est relié le module d'égalisation de courants, après que le module d'égalisation de courants a détecté que des dispositifs alimentés reliés à chacune des deux lignes d'alimentation ou plus ont été mis sous tension.
